# EUROPÄISCHE PATENTSCHRIFT

(11) **EP 1 323 945 B1**
(45) Veröffentlichungstag und Bekanntmachung des Hinweises auf die Patenterteilung: **04.05.2005**
(21) Anmeldenummer: 02024725.0
(22) Anmeldetag: 06.11.2002
(51) Int. Cl.: F16F 9/04, F16F 9/05

(54) **Federungseinrichtung mit Doppelrollbalg**
Suspension device with a double rolling-lobe
Dispositif de suspension avec double diaphragme à déroulement

(30) Priorität: 22.12.2001 DE 10163829
(43) Veröffentlichungstag der Anmeldung: 02.07.2003
(73) Patentinhaber: ContiTech Luftfedersysteme GmbH, 30165 Hannover (DE)
(72) Erfinder: Thurow, Gerhard, 30823 Garbsen (DE)

(56) Entgegenhaltungen:
- DE-A- 10 024 572
- DE-A- 19 952 799
- GB-A- 818 604
- US-A- 3 028 174
- US-A- 3 168 278

## Beschreibung

Die Erfindung betrifft eine Federungseinrichtung mit Doppelrollbalg, insbesondere zur Verwendung in der Vorderradgabel eines Zweiradfahrzeugs, gemäß dem Oberbegriff des Anspruchs 1.

Die DE 199 52 799 beschreibt eine Federungseinrichtung mit Doppelrollbalg. Man kann sich vorstellen, dass eine solche Federungseinrichtung aus zwei spiegelbildlich zueinander angeordneten Luftfederelementen aufgebaut ist. Jedes der beiden Federelemente besteht im wesentlichen aus einem Rollbalg und einem Abrollkolben. Auf eine bei einer üblichen Luftfeder erforderliche Abdeckplatte kann verzichtet werden, da eine Stützeinrichtung ("Stützglocke", "Außenmantel") zur seitlichen Begrenzung der Rollbälge vorgesehen ist. In bevorzugten Ausführungsformen bilden die beiden Rollbälge ein einziges Stück, d. h. die beiden Rollbälge bilden einen Doppelrollbalg. Die Abrollkolben sind endseitig und der Außenmantel ist beidendig leicht konisch ausgebildet.

Beim Einfederungsvorgang wird der eine Teil des Doppelrollbalgs mit Hilfe des einen Abrollkolbens komprimiert, während gleichzeitig der andere Teil des Doppelrollbalgs mit Hilfe des anderen Abrollkolbens entlastet wird. Wegen der Konizität von Außenmantel und Abrollkolben ergibt sich eine Oben/unten-Asymmetrie, was zur Folge hat, dass sich die Wirkdurchmesser der beiden Rollfalten verändern, woraus eine weiche Federwirkung resultiert.

Bei der bekannten Federungseinrichtung ist der Außenmantel aus einem einzigen Stück gefertigt. Bei der Fertigung der Federungseinrichtung können insofern Schwierigkeiten wegen der sich konisch verjüngenden Enden des Außenmantels auftreten. Ein weiterhin ungelöstes Problem besteht in einer zuverlässigen Fixierung des Doppelrollbalgs am Außenmantel.

Die sich daraus ergebende Aufgabe der vorliegenden Erfindung besteht nun darin, eine zuverlässige Positionierung und Fixierung des Doppelrollbalgs am Außenmantel vorzunehmen und außerdem einen praktikablen Zusammenbau der Luftfederteile, insbesondere des Außenmantels, anzugeben.

Gemäß Anspruch 1 erfolgt die Lösung dieses Problems mittels eines innerhalb des Doppelrollbalgs angeordneten Spannringes, der zwischen den Enden des zweigeteilten Außenmantels eingespannt wird. Auf diese Weise wird der zwischen dem intern befindlichen Spannring und den außen befindlichen Außenmantel-Enden eingespannte Doppelrollbalg an der vorgegebenen Stelle zuverlässig fixiert. Ein Verrutschen des Rollbalgs längs der Innenwand des Außenmantels wird somit verhindert.
Auf die - insbesondere bei Einfachrollbälgen - für die Kraftübertragung sonst erforderlichen Abdeckplatten kann hier gänzlich verzichtet werden.
Ein weiterer Vorteil des zweigeteilten Außenmantels besteht in einem leichten Zusammenbau der Federungseinrichtung. Abrollkolben und Rollbalg müssen nicht über die sich konisch verjüngenden Enden eines einstückigen Außenmantels eingeführt werden. Der Zusammenbau erfolgt statt dessen über die relativ weiten, zueinander gekehrten Enden der erfindungsgemäßen Außenmantel-Teile.

Durch die Verwendung einer Überwurfmutter ergibt sich eine *lösbare* Verbindung der beiden Außenmantel-Teile. Auf diese Weise kann die Federungseinrichtung problemlos auseinander und wieder zusammengebaut werden.

Eine preiswerte und trotzdem zuverlässige Fixierung des Rollbalgs am Außenmantel kann gemäß Anspruch 3 mittels eines Bördelvorganges erfolgen.

Der Spannring ist vorzugsweise ein Flachring.
Zur leichteren Montage kann statt dessen auch ein flexibler Innenring in den drucklosen Balg eingeführt werden.

Anhand der beigefügten Zeichnungen wird die Erfindung näher beschrieben. Es zeigt:
Fig. 1 die Vorderradgabel eines Fahrrades mit erfindungsgemäßer Federungseinrichtung, in Seitenansicht;
Fig. 2 dieselbe Vorderradgabel, von vorne gesehen.
Fig. 3 zeigt den Schnitt AA der in Fig. 2 dargestellten Vorderradgabel;
Fig. 4 eine erfindungsgemäße Federungseinrichtung in Seitenansicht;
Fig. 5 dieselbe Federungseinrichtung im Längsschnitt,
Fig. 6 den Ausschnitt A der in Fig. 5 dargestellten Federungseinrichtung;
Fig. 7 und Fig. 8 ebenfalls solche Ausschnitte, und zwar von alternativen Ausführungsformen.

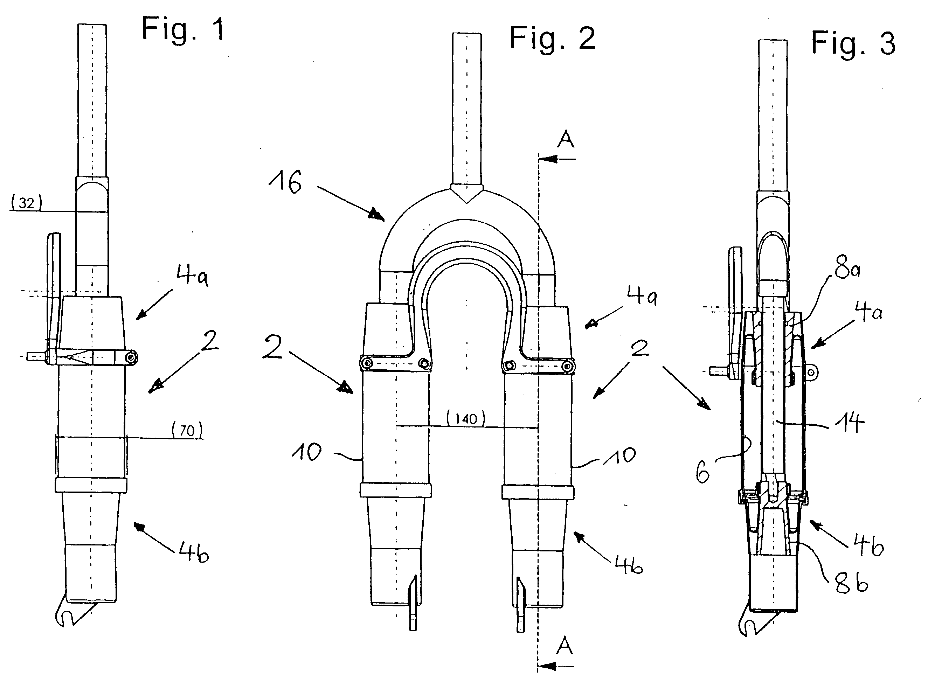

Wie die bereits eingangs erwähnte Federungseinrichtung, so besteht auch die in den Fig. 1 bis Fig. 5 dargestellte Luftfeder 2 aus zwei zueinander spiegelbildlich angeordneten Luftfederelementen 4a und 4b mit jeweils einem Rollbalg 6a und 6b und einem' Abrollkolben 8a und 8b. Im vorliegenden Ausführungsbeispiel bilden die beiden Rollbälge 6a und 6b die ungeteilten Hälften eines Doppelrollbalgs 6, der aus elastomerem, mit Gewebeeinlage verstärktem Material besteht.
Auf eine bei üblichen Luftfedern sonst erforderliche Abdeckplatte kann auch hier verzichtet werden, da eine Stützeinrichtung ("Außenmantel") 10 zur seitlichen Begrenzung und Längsführung des Doppelrollbalgs 6 vorgesehen ist. Sowohl die Abrollkolben 8a und
8b als auch die Enden des Außenmantels 10 sind leicht konisch ausgebildet. Der gemeinsame Innenraum 12 des Doppelrollbalgs 6 kann über einen der Abrollkolben 8a und 8b mit Luft befüllt werden.

Aus der in Fig. 3 im Schnitt dargestellten Luftfedereinrichtung ist ersichtlich, dass die beiden Abrollkolben 8a und 8b mittels eines rohrförmigen Verbindungsstückes 14 axial starr miteinander verbunden sind. Aus der Fig. 2 geht hervor, dass die Vorderradgabel 16 eines Fahrrades oder eines sonstigen Zweiradfahrzeuges aus zwei Luftfedern 2 gebildet wird. Dabei sind obere Fortführungen der Abrollkolben 8a mit der Fahrrad-Lenkerachse und weiter mit dem Fahrgestell des Fahrrades verbunden, während die unteren Enden der beiden Außenmäntel 10 Aufnahmen für die Befestigung des Vorderrades aufweisen.
Wie bei dem Einfederungsvorgang der eingangs erwähnten Luftfedereinrichtung, so wird auch hier der eine Teil 6b des Doppelrollbalgs 6 mit Hilfe des einen Abrollkolbens 8b komprimiert, während gleichzeitig der andere Teil 6a des Rollbalgs 6 mit Hilfe des anderen Abrollkolbens 8a entlastet wird. Die Federkraft entsteht bei der Einfederung durch die Differenz der Wirkdurchmesser. Die wirksame Fläche ist eine Kreisringfläche, begrenzt durch den Wirkdurchmesser der kleinen Falte und den Wirkdurchmesser der großen Falte. Zusätzlich entsteht eine Druckerhöhung durch Kompression des Gasvolumens im Innenraum der Doppelfalte (des Doppelrollbalgs 6) bzw., falls die Federungseinrichtung 2 mit Hydraulikflüssigkeit statt mit Luft gefüllt ist, ergibt sich eine Erhöhung des Druckes in einem Druckspeicher.

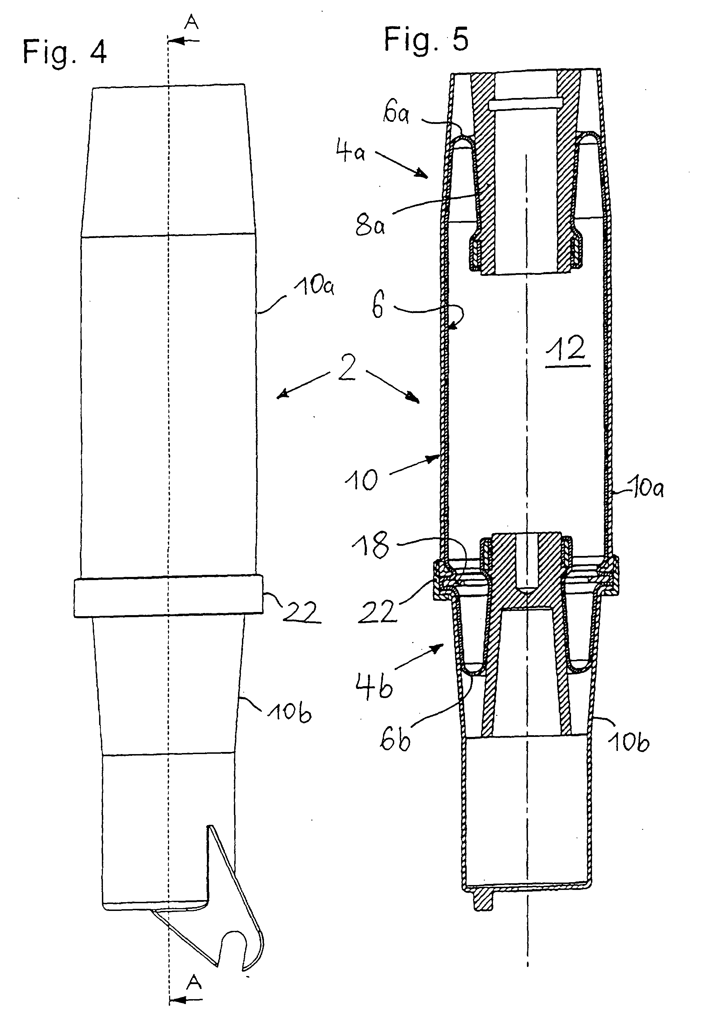

Das besondere der erfindungsgemäßen Federungseinrichtung besteht in einer axialen Balgwandeinspannung.
Bei der Abstützung eines Fahrrades mit Hilfe der Luftfederungseinrichtung 2 wirken Kräfte zwischen Doppelrollbalg 6 und Außenmantel 10. Dabei muss ein Gleiten des Doppelrollbalgs 6 an der Innenwand des Außenmantels 10 unbedingt verhindert werden. Erfindungsgemäß wird aus diesem Grunde die Balgwand am Außenmantel 10 eingespannt und zwar durch Fixierung mittels eines eingelegten Ringes 18 (siehe Fig. 5, 6 und 8). Dieser Ring 18 ist vergleichbar einer aus dem Heizungs/Sanitärbereich bekannten Flachdichtung. Der eingelegte Ring 18 ist im Außendurchmesser größer als der Balg 6 im drucklosen Zustand. Dadurch kann der Ring 18 sicher im Balg 6 positioniert werden und die Verbindung zur Armatur (Außenmantel) 10 ist leicht möglich.

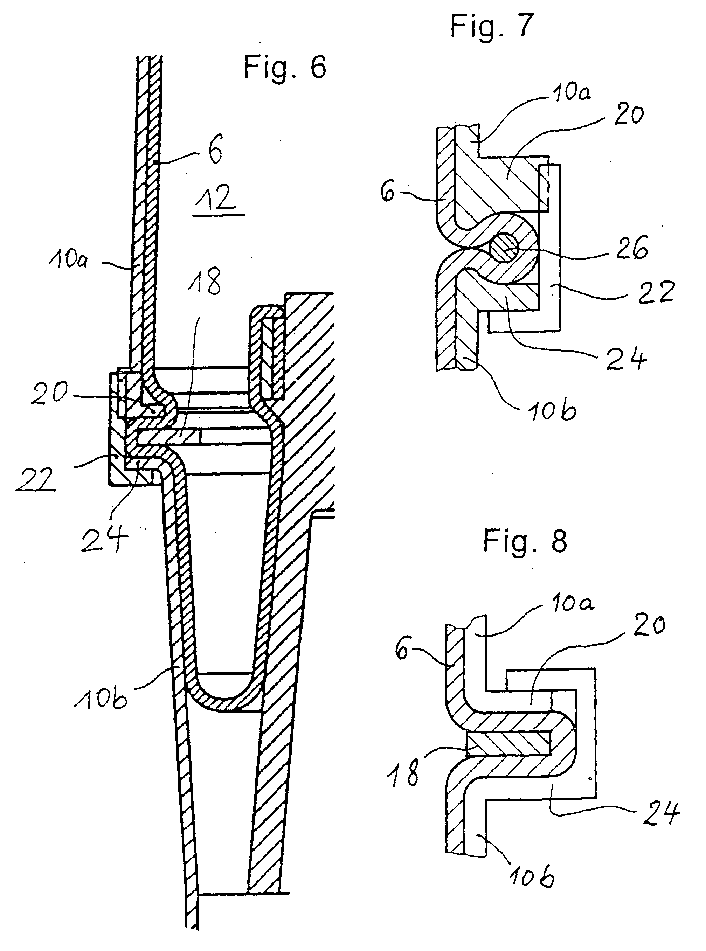

Der Außenmantel 10 besteht aus zwei Teilen 10a und 10b, wovon der eine Teil 10a einen nach innen umgelegten Rand 20 und ein Außengewinde zur Schraubbefestigung einer Überwurfmutter 22 aufweist (Fig. 6). Der andere Teil 10b des Außenmantels 10 weist einen nach außen umgelegten Rand 24 auf - zur Ineingriffnahme durch den Rand der Überwurfmutter 22. Die Fixierung und Einspannung des Doppelrollbalgs 6 am Außenmantel 10 mit Hilfe des Ringes 18 erfolgt nun in der Weise, dass das eine Teil 10a des Außenmantels 10 bis an den Ring 18 geschoben wird, so dass der nach innen umgelegte Rand 20 unter Zwischenschaltung der Balgwand auf dem Ring 18 zu liegen kommt. Dann wird das andere Teil 10b des Außenmantels 10 von der anderen Seite dagegen geschoben bis der nach außen umgelegte Rand 24 unter Zwischenschaltung der Balgwand die andere Seite des Ringes 18 berührt. In dieser Position wird die Überwurfmutter 22 zur Einspannung des Balges 6 und zur Verbindung der beiden Teile 10a und 10b des Außenmantels 10 miteinander verschraubt.

Wie aus Fig. 7 hervorgeht, kann anstelle eines Flachringes 18 ein flexibler Rundring 26 verwendet werden. Die umgelegten Ränder 20, 24 der Außenmantel-Teile 10a und 10b weisen geeignete Ausnehmungen zur Aufnahme des Rundringes 26 auf. Auch hier werden die beiden Außenmantel-Teile 10a und 10b unter Zwischenschaltung des mit dem Rundring 26 fixierten Balges 6 miteinander verbunden.

Bei der in Fig. 8 dargestellten Alternative erfolgt die Fixierung des Balges 6 ähnlich Fig. 6 mittels eines Flachringes 18. Anstelle einer Verschraubung erfolgt hier die (nichtlösbare) Verbindung beider Außenmantel-Teile 10a und 10b mit Hilfe eines Bördelvorganges.

### Bezugszeichenliste

- 2: Federungseinrichtung, Luftfeder
- 4a, 4b: Luftfederelement
- 6a, 6b: Rollbalg
- 6: Doppelrollbalg, Balg
- 8a, 8b: Abrollkolben
- 10: Stützeinrichtung, Außenmantel, Armatur
- 10a, 10b: Teile des Außenmantels
- 12: Innenraum des Doppelrollbalgs
- 14: Verbindungsstück
- 16: Vorderradgabel
- 18: Spannring, Ring, Flachring
- 20: umgelegter Rand des Teils 10a
- 22: Überwurfmutter
- 24: nach außen umgelegter Rand des Teils 10b
- 26: Spannring, Rundring

## Patentansprüche

1. Federungseinrichtung (2), insbesondere zur Verwendung in der Vorderradgabel (16) eines Zweiradfahrzeugs, mit zwei koaxial gegensinnig zueinander angeordneten Federelementen (4a und 4b), die im wesentlichen aus je einem Rollbalg (6a und 6b) und je einem Abrollkolben (8a und 8b) bestehen,
wobei die beiden Rollbälge (6a und 6b) einen gemeinsamen Doppelrollbalg (6) bilden, und wobei die beiden Federelemente (4a und 4b) einen gemeinsamen Außenmantel (10) aufweisen,
**dadurch gekennzeichnet,**
- **dass** der Doppelrollbalg (6) einen intern angeordneten Spannring (18 oder 26) aufweist, und
- **dass** der Außenmantel (10) aus zwei Teilen (10a und 10b) besteht, zwischen dessen beiden Enden der Doppelrollbalg (6) mittels des Spannringes (18 oder 26) eingespannt ist.

2. Federungseinrichtung nach Anspruch 1,
**dadurch gekennzeichnet,**
- **dass** der eine Teil (10a) des Außenmantels (10) einen umgelegten Rand (20) und ein Außengewinde zur Schraubbefestigung einer Überwurfmutter (22) aufweist, und
- **dass** der andere Teil (10b) des Außenmantels (10) einen nach außen umgelegten (Rand 24) aufweist,
zur Schraubverbindung der beiden Teile (10a und 10b) mittels der Überwurfmutter (22) miteinander und Einspannung des Rollbalgs (6) unter Zwischenschaltung des Spannringes (18 oder 26).

3. Federungseinrichtung nach Anspruch 1,
**dadurch gekennzeichnet,**
**dass** die beiden Teile (10a und 10b) des Außenmantels (10) jeweils mit Hilfe eines Bördelvorganges miteinander verbindbar sind, unter fixierter Einspannung des Rollbalgs (6) unter Zwischenschaltung des Spannringes (18).

4. Federungseinrichtung nach einem der Ansprüche 1 bis 3,
**dadurch gekennzeichnet,**
**dass** der Spannring ein Flachring (18) ist.

5. Federungseinrichtung nach einem der Ansprüche 1 bis 3,
**dadurch gekennzeichnet,**
**dass** der Spannring ein flexibler Rundring (26) ist.

## Claims

1. Suspension device (2), in particular for use in the front-wheel fork (16) of a two-wheeled vehicle, having two spring elements (4a and 4b) which are arranged coaxially in opposite directions to one another and each comprise substantially a rolling bellows (6a and 6b) and a rolling piston (8a and 8b),
the two rolling bellows (6a and 6b) forming a common double rolling bellows (6),
and the two spring elements (4a and 4b) having a common outer casing (10),
**characterized**
- **in that** the double rolling bellows (6) has an internally arranged clamping ring (18 or 26), and
- **in that** the outer casing (10) comprises two parts (10a and 10b),
the double rolling bellows (6) being clamped in between the two ends of the said outer casing (10) by means of the clamping ring (18 or 26).

2. Suspension device according to Claim 1,
**characterized**
- **in that** one part (10a) of the outer casing (10) has a folded-over edge (20) and an external thread for fastening a union nut (22) in a screwed manner, and
- **in that** the other part (10b) of the outer casing (10) has an outwardly folded-over edge (24),
for the screw connection of the two parts (10a and 10b) to one another by means of the union nut (22) and for clamping in the rolling bellows (6) with the interconnection of the clamping ring (18 or 26).

3. Suspension device according to Claim 1, **characterized in that** the two parts (10a and 10b) of the outer casing (10) can each be connected to one another with the aid of a beading operation, with fixed clamping in of the rolling bellows (6) and interconnection of the clamping ring (18).

4. Suspension device according to one of Claims 1 to 3, **characterized in that** the clamping ring is a flat ring (18).

5. Suspension device according to one of Claims 1 to 3, **characterized in that** the clamping ring is a flexible cross-sectionally round ring (26).

## Revendications

1. Dispositif de suspension (2),
notamment pour l'utilisation dans la fourche de roue avant (16) d'un véhicule deux roues, comprenant deux éléments de ressort (4a et 4b) disposés coaxialement en sens opposé l'un par rapport à l'autre, qui se composent essentiellement d'un soufflet roulant respectif (6a et 6b) et d'un piston de déroulage respectif (8a et 8b),
les deux soufflets roulants (6a et 6b) formant un double soufflet roulant commun (6), et les deux éléments de ressort (4a et 4b) présentant une enveloppe extérieure commune (10),
**caractérisé en ce que**
le double soufflet roulant (6) présente un collier de serrage (18 ou 26) disposé intérieurement,
et
**en ce que** l'enveloppe extérieure (10) se compose de deux parties (10a et 10b), entre les deux extrémités desquelles le double soufflet roulant (6) est serré au moyen du collier de serrage (18 ou 26).

2. Dispositif de suspension selon la revendication 1,
**caractérisé en ce que**
l'une des parties (10a) de l'enveloppe extérieure (10) présente un bord replié (20) et un filetage extérieur pour la fixation par vissage d'un écrou d'accouplement (22), et
**en ce que** l'autre partie (10b) de l'enveloppe extérieure (10) présente un bord replié vers l'extérieur (24) pour la connexion par vissage des deux parties (10a et 10b) l'une à l'autre au moyen de l'écrou d'accouplement (22) et pour le serrage du soufflet roulant (6) en interposant le collier de serrage (18 ou 26).

3. Dispositif de suspension selon la revendication 1,
**caractérisé en ce que**
les deux parties (10a et 10b) de l'enveloppe extérieure (10) peuvent être à chaque fois connectées l'une à l'autre à l'aide d'une opération de rabattage, par serrage fixe du soufflet roulant (6) en interposant le collier de serrage (18).

4. Dispositif de suspension selon l'une quelconque des revendications 1 à 3,
**caractérisé en ce que**
le collier de serrage est un collier plat (18).

5. Dispositif de suspension selon l'une quelconque des revendications 1 à 3,
**caractérisé en ce que**
le collier de serrage est un collier rond flexible (26).
